## Europäisches Patentamt
## European Patent Office
## Office européen des brevets

(11) Veröffentlichungsnummer: **0 141 332**
**A2**

## EUROPÄISCHE PATENTANMELDUNG

(21) Anmeldenummer: **84112409.2**

(22) Anmeldetag: **15.10.84**

(51) Int. Cl.⁴: **G 06 F 15/16**
**G 06 F 13/16**

(30) Priorität: **21.10.83 DE 3338341**

(43) Veröffentlichungstag der Anmeldung:
**15.05.85 Patentblatt 85/20**

(84) Benannte Vertragsstaaten:
**AT CH DE FR GB IT LI**

(71) Anmelder: **Siemens Aktiengesellschaft**
**Berlin und München Wittelsbacherplatz 2**
**D-8000 München 2(DE)**

(72) Erfinder: **Jeffré, Thomas, Dipl.-Inform.**
**Münchner Strasse 10 1/2**
**D-8019 Moosach(DE)**

(54) **Mehrfachbusanordnung für die Verbindung von Prozessoren und Speichern in einem Mehrprozessorsystem.**

(57) In einem Mehrprozessorsystem kann die Verbindung zwischen Prozessoren und Speichern über eine Mehrfachbusanordnung erfolgen. Dabei ist jeder Prozessor (P) durch jeweils einen Prozessorverbindungsbus über jeweils einen Koppler mit mindestens einem Bus und jeder Speicher durch jeweils einen Speicherverbindungsbus über jeweils einen Koppler mit mindestens einem Bus verbunden. Um die Anzahl der Koppler (KS) pro Speicher (S) zu verringern, wird jeder Speicher (S) jeweils nur mit einem Teil der Busse (B) über einen Koppler (KS) verbunden, während jeder Prozessor (P) jeweils mit jedem Bus (B) über einen Koppler (KP) verbunden ist. Zweckmäßig ist es, jeden Speicher (S) nur jeweils mit einem Bus (B) zu verbinden oder um das System redundant zu machen, jeden Speicher (S) mit jeweils nur zwei Bussen (B) über einen Koppler zu verbinden. Die Anzahl der Koppler in der Mehrfachbusanordnung kann auch dadurch verringert werden, daß jeder Prozessor (P) jeweils nur mit einem Teil der Busse (B) über einen Koppler (KP) verbunden ist und daß jeder Speicher (S) jeweils an jeden Bus (B) durch einen Koppler (KS) angeschlossen ist. Auch hier muß jeder Prozessor (P) nur mit einem Bus über einen Koppler verbunden werden, oder um das System redundant zu machen, mit zwei Bussen.

FIG 2

SIEMENS AKTIENGESELLSCHAFT
Berlin und München

Unser Zeichen
VPA 83 P 8 0 3 4 E

0141332

## Mehrfachbusanordnung für die Verbindung von Prozessoren und Speichern in einem Mehrprozessorsystem

Die Erfindung bezieht sich auf eine Mehrfachbusanordnung für die Verbindung von Prozessoren und Speichern in einem Mehrprozessorsystem, bei der jeder Prozessor durch jeweils einen Prozessorverbindungsbus über jeweils einen Koppler mit mindestens einem Bus und die Speicher durch jeweils einen Speicherverbindungsbus über jeweils einen Koppler mit mindestens einem Bus verbunden ist.

Aus "Elektronik 1979", Heft 20, S. 75 ist bekannt, wie eine Mehrzahl von Prozessoren mit einer Mehrzahl von Speichern verbunden werden kann. In Systemen mit Kreuzschienenverteiler sind die Prozessoren und die Speicher matrixartig miteinander verbunden. In jedem Schnittpunkt des Prozessorverbindungsbusses und des Speicherverbindungsbusses ist ein Koppler angeordnet, durch den eine Verbindung zwischen einem Speicherverbindungsbus und einem Prozessorverbindungsbus hergestellt werden kann. Ein Vorteil des Kreuzschienenverteilers ist darin zu sehen, daß der Durchsatz an Daten hoch ist, nachteilig ist, daß eine große Anzahl von Kopplern erforderlich ist und Fehlertoleranz bei Kopplerausfall nicht möglich ist.

Aus der Literaturstelle ist weiterhin bekannt, die Verbindung zwischen mehreren Prozessoren und mehreren Speichern mit Hilfe einer einfachen Busanordnung herzustellen. Hierbei erfolgt die gesamte Kommunikation zwischen den Rechnern und Speichern über den einzigen Bus. Ein Nachteil der Einfachbusanordnung besteht darin, daß der Durchsatz an Daten bei höherer Prozessoranzahl sehr niedrig ist. Ein weiterer Nachteil besteht darin, daß ein Fehler im Koppler

I1 1 The - 4.10.1983

oder in der Busanordnung zu einem Ausfall des Mehrprozessorsystems führen kann.

Schließlich ergibt sich aus der Literaturstelle noch eine
Mehrfachbusanordnung, bei dem jeder Prozessor mit jedem
Bus und jeder Speicher mit jedem Bus über einen Koppler verbindbar ist. Damit erhöht sich die Sicherheit und Verfügbarkeit des Mehrprozessorsystems allerdings auf Kosten
eines hohen Aufwandes, da eine Vielzahl von Kopplern und
Ansteuerungen für die Koppler erforderlich ist.

Die der Erfindung zugrundeliegende Aufgabe besteht darin,
die Mehrfachbusanordnung für die Verbindung von Prozessoren und Speichern in einem Mehrprozessorsystem derart auszuführen, daß der Durchsatz an Daten möglichst hoch ist
und trotzdem der Aufwand an Hardware möglichst gering ist.
Diese Aufgabe wird bei einer Mehrfachbusanordnung der eingangs angegebenen Art dadurch gelöst, daß jeder Prozessor
jeweils mit jedem Bus durch einen Koppler verbunden ist
und daß jeder Speicher jeweils nur an einen Teil der Busse
über einen Koppler angeschlossen ist.

Bei einer derartigen Mehrfachbusanordnung wird die Anzahl
der Koppler pro Speicher erheblich verringert, trotzdem
bleibt der Durchsatz sehr hoch. Weiterhin gibt es keine
Speicherkonflikte. Wollen nämlich zwei Prozessoren gleichzeitig auf einen Speicher zugreifen, dann beanspruchen beide
beim Zugriff denselben Bus. Dieser kann aber nur mit einem
Zugriff befaßt sein und damit kann an dem Speicher jeweils
nur eine Zugriffsanforderung gestellt werden. Die Folge
ist, daß weniger Anforderungsleitungen zwischen Bussen und
Speichern nötig sind und daß Speicherarbiter entfallen
können. Das durch diesen Aufbau der Mehrfachbusanordnung
gegebene Auswahlverfahren wird im folgenden speicherabhängiges Busauswahlverfahren genannt.

Die oben angegebene Aufgabe kann weiterhin dadurch gelöst werden, daß jeder Prozessor jeweils nur mit einem Teil der Busse über einen Koppler verbunden ist und daß jeder Speicher jeweils an jeden Bus durch einen Koppler anschließbar ist.

Bei dieser Mehrfachbusanordnung ist die Anzahl der Koppler pro Prozessor verringert worden. Hier lassen sich Anforderungsleitungen zwischen Prozessoren und Bussen einsparen. Das bei dieser Mehrfachbusanordnung vorliegende Auswahlverfahren wird im folgenden prozessorabhängiges Busauswahlverfahren genannt.

Wenn jeder Speicher jeweils nur mit einem Bus über einen Koppler verbunden ist, ist die Einsparung von Kopplern pro Speicher am größten. Dies hat jedoch den Nachteil, daß keine Fehlertoleranz möglich ist. Fällt z.B. der dem Speicher zugeordnete Koppler aus, dann kann auf diesen Speicher nicht mehr zugegriffen werden. Um für diesen Fall die Mehrfachbusanordnung redundant zu machen, ist es vorteilhaft, daß jeder Speicher mindestens mit zwei Bussen über einen Koppler verbunden ist.

Entsprechendes gilt auch für die Verbindung der Prozessoren mit der Mehrfachbusanordnung. Auch hier kann ein Prozessor mit mehr als einem Bus über einen Koppler verbunden werden und dadurch erreicht werden, daß eine Fehlertoleranz möglich ist.

Vorteilhaft ist es, wenn die Anzahl der mit jeweils einem Bus verbundenen Speicher von deren Zugriffszeit abhängt. Dann ist es für den Wirkungsgrad günstig, wenn ein Bus jeweils wenigen schnellen oder einem schnellen Speicher oder vielen langsamen Speichern zugeordnet wird.

Weiterhin ist es vorteilhaft, wenn die Anzahl der mit einem Bus verbundenen Prozessoren von deren Zugriffsprivileg abhängt. Dann ist es möglich, jeweils vielen Prozessoren mit niedrigem Zugriffsprivileg einen Bus zuzuordnen, an einem Bus dagegen nur wenige oder nur ein Prozessor mit hohem Zugriffsprivileg anzuschließen.

Der Wirkungsgrad der Mehrfachbusanordnung wird weiterhin noch dadurch gesteigert, daß mindestens ein Bus für Blocktransfers oder für eine ununterbrechbare Folge von Zugriffen von einem Prozessor vorgesehen ist. Mit diesem Bus sind dann nur die Speicher und Prozessoren verbunden, die in einer derartigen Betriebsart arbeiten können.

Anhand von Ausführungsbeispielen, die in den Figuren dargestellt sind, wird die Erfindung weiter erläutert. Es zeigen

Fig. 1 eine Mehrfachbusanordnung, bei der jeder Prozessor und jeder Speicher mit jedem Bus verbunden ist,

Fig. 2 eine Mehrfachbusanordnung, bei der im speicherabhängigen Busauswahlverfahren gearbeitet werden kann,

Fig. 3 eine Mehrfachbusanordnung, bei der im prozessorabhängigen Busauswahlverfahren gearbeitet werden kann,

Fig. 4 eine Mehrfachbusanordnung, bei dem die Prozessoren in Klassen verschiedenen Zugriffsprivilegs eingeteilt sind,

Fig. 5 eine Mehrfachbusanordnung, bei der die Speicher in Klassen unterschiedlicher Zugriffszeiten eingeteilt sind,

Fig. 6 eine Mehrfachbusanordnung für prozessorabhängiges Busauswahlverfahren, die redundant ist,

Fig. 7 einen Aufbau eines Kopplers.

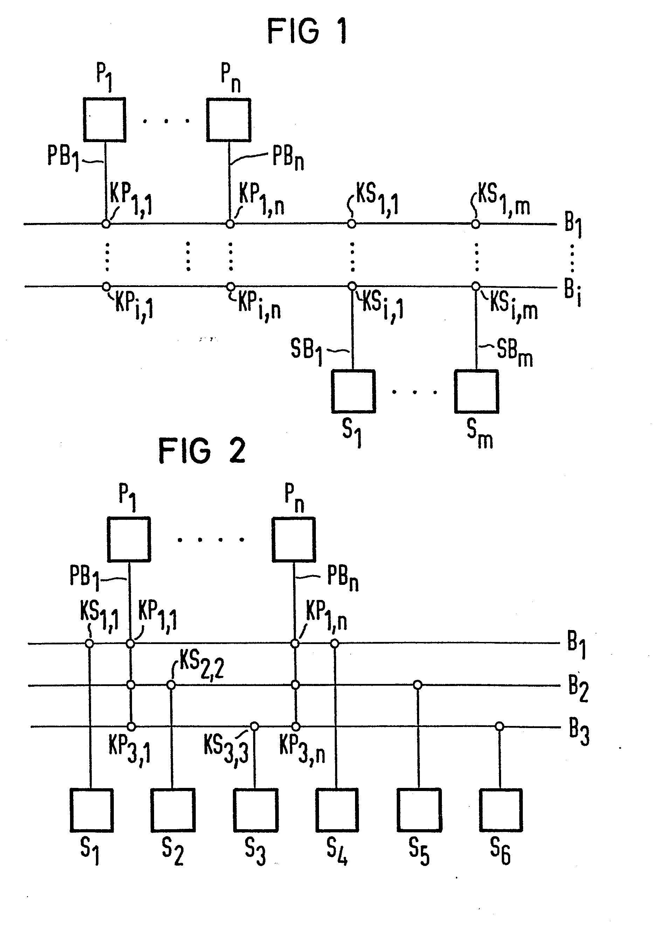

Fig. 1 zeigt eine Mehrfachbusanordnung für ein Mehrprozessorsystem, das z.B. aus der oben angegebenen Literaturstelle bekannt ist. Hier ist eine Mehrzahl von Bussen $B_1$...
$B_i$ vorgesehen, an die Prozessoren P und Speicher S über
Koppler K angeschlossen sind. Die Prozessoren $P_1$...$P_n$ sind
jeweils über Prozessorverbindungsbusse $PB_1$...$PB_n$ mit jeweils allen Bussen $B_1$...$B_i$ über Koppler KP verbindbar.
Ebenso sind alle Speicher $S_1$...$S_m$ jeweils über Speicherverbindungsbusse $SB_1$...$SB_m$ mit jeweils allen Bussen $B_1$...$B_i$
über Koppler KS verbindbar. Der Nachteil einer derartig
ausgeführten Mehrfachbusanordnung besteht darin, daß eine
Vielzahl von Kopplern KP bzw. KS erforderlich ist.

Die Anzahl der Koppler in der Mehrfachbusanordnung wird
dann verringert, wenn gemäß Fig. 2 das speicherabhängige
Busauswahlverfahren gewählt wird. In Fig. 2 sind nur drei
Busse $B_1$, $B_2$ und $B_3$ dargestellt. Die Verbindung der Prozessoren $P_1$ ... $P_n$ mit den Bussen $B_1$... $B_3$ erfolgt entsprechend Fig. 1. Das heißt jeder Prozessor $P_1$... $P_n$ ist
jeweils mit jedem Bus $B_1$... $B_3$ verbunden. Die Verbindung
der Speicher S mit den Bussen $B_1$... $B_3$ ist jedoch unterschiedlich zur Figur 1. Hier ist jeder Speicher S jeweils
nur mit einem Bus über einen Koppler KS verbindbar. Zum
Beispiel ist der Speicher $S_1$ nur mit dem Bus $B_n$ über den
Koppler $KS_{1,1}$, der Speicher $S_2$ nur mit dem Bus $B_2$ über den
Koppler $KS_{2,2}$ und der Speicher $S_3$ nur mit dem Bus $B_3$ über
den Koppler $KS_{3,3}$ verbindbar. Es ist möglich, daß jeweils
nur ein Speicher S mit einem Bus B verbindbar ist. Es ist
jedoch auch möglich, wie in Fig. 2 dargestellt, daß mehr
als ein Speicher S mit jeweils einem Bus verbunden ist.
Da nunmehr nur jeweils ein Koppler KS pro Speicher S vorgesehen ist, und nicht mehr eine Vielzahl von Kopplern KS
pro Speicher S wie in Fig. 1, kann die Anzahl der Koppler KS pro Mehrfachbusanordnung im speicherabhängigen Busauswahlverfahren erheblich verringert werden.

Beim speicherabhängigen Busauswahlverfahren hängt somit die Nummer des beim Zugriff angesprochenen Busses B von der Nummer des bei diesem Zugriff angesprochenen Speichers ab. Es gibt somit keine Speicherkonflikte. Wollen nämlich zwei Prozessoren gleichzeitig z.B. auf den Speicher $S_1$ zugreifen, dann beanspruchen sie beide beim Zugriff den Bus $B_1$. Dieser kann jeweils nur mit einem Zugriff befaßt sein und somit kann an den Speicher $S_1$ jeweils nur eine Zugriffsanforderung gestellt werden. Dies ermöglicht Vereinfachungen der Hardware gegenüber Systemen mit zufallsbestimmter Busauswahl, die z.B. bei Fig. 1 möglich ist. Es sind nämlich wenige Anforderungsleitungen zwischen Bussen und Speichern nötig und Speicherarbiter können entfallen.

In der Praxis ist es oft erwünscht, daß die Zuordnung zwischen Bussen und Speichern gleichmäßig ist, daß also jedem Bus gleichviele Speicher zugeordnet sind, wie in Fig. 2 gezeigt ist. Sind die Anzahl der Busse B und die Anzahl der Speicher S Zweierpotenzen, dann läßt sich ein speicherabhängiges Busauswahlverfahren einfach dadurch realisieren, daß ein $\log_2 (S)$ bit breites Binärwort als Speicheradresse verwendet wird und daraus irgendwelche bits, beispielsweise die höchstwertigen bits entnommen und als Busadresse verwendet werden.

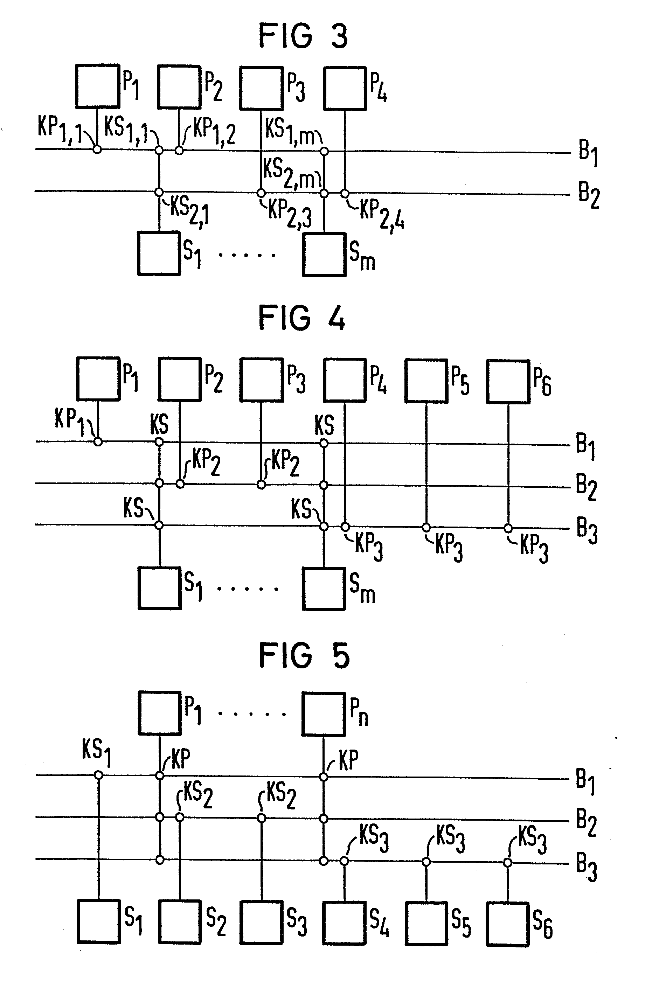

Eine Verringerung der Anzahl der Koppler kann aber auch dadurch erreicht werden, daß ein prozessorabhängiges Busauswahlverfahren gewählt wird, das in Fig. 3 dargestellt ist. Hier ist jeder Speicher $S_1 \dots S_m$ jeweils mit jedem Bus über einen Koppler KS verbunden. Im Ausführungsbeispiel sind dies zwei Busse $B_1$ und $B_2$. Jeder Prozessor P ist dagegen jeweils nur mit einem Bus über einen Koppler KP verbunden. Somit ist pro Prozessor P nur noch jeweils ein Koppler notwendig und damit die Anzahl der Koppler pro Prozessor gegenüber der Ausführungsform der Fig. 1 erheblich geringer. So ist z.B. im Ausführungsbeispiel der Fig. 3 der Prozessor $P_1$ bzw. $P_2$ nur mit dem Bus $B_1$, und der Prozessor $P_3$ bzw. $P_4$ nur jeweils mit dem Bus $B_2$ verbunden.

Bei einem prozessorabhängigen Busauswahlverfahren hängt die Wahl des Busses, der für den Zugriff verwendet wird, davon ab, welcher Prozessor den Zugriff ausführt. Wenn also z.B. der Prozessor $P_1$ einen Zugriff ausführen will, muß er den Bus $B_1$ benutzen, die Kopplung durch den Koppler $KP_{1,1}$ mit dem Bus $B_1$ herbeiführen und kann dann jeden Speicher $S_1$ ... $S_m$ über die Koppler KS ansteuern.

Bei einem prozessorabhängigen Busauswahlverfahren lassen sich somit Anforderungsleitungen zwischen Prozessoren und Bussen und Koppler einsparen.

Der Wirkungsgrad einer Mehrfachbusanordnung kann dadurch gespeichert werden, daß gemäß Fig. 4 die Prozessoren in Klassen verschiedenen Zugriffsprivilegs eingeteilt werden. Dann wird jedem Bus eine von der Klasseneinteilung abhängige Anzahl von Prozessoren zugeteilt, so daß sich jeweils viele Prozessoren mit niedrigen Zugriffsprivilegien einen Bus teilen, jedoch jeweils nur wenige Prozessoren mit hohem Zugriffsprivileg an einem Bus angeschlossen sind. Im Beispiel der Fig. 4 hat der Prozessor $P_1$ das höchste Zugriffsprivileg und ist nur mit einem Bus $B_1$ verbunden. Zwei Prozessoren mit dem nächstniedrigen Zugriffsprivileg, in Fig. 4 mit $P_2, P_3$ bezeichnet, sind jeweils gemeinsam an einen zweiten Bus $B_2$ angeschlossen. Drei Prozessoren $P_4, P_5, P_6$ mit niedrigstem Zugriffsprivileg sind dagegen an den Bus $B_3$ angeschlossen. Die Speicher $S_1$ ... $S_m$ sind dagegen jeweils mit allen Bussen $B_1$ ... $B_3$ über Koppler KS verbindbar.

Der Wirkungsgrad einer Mehrfachbusanordnung kann auch dadurch gesteigert werden, daß bei Speichern mit unterschiedlichen Zugriffszeiten eine Klasseneinteilung nach Zugriffszeiten erfolgt. Dann wird ein Bus jeweils wenigen schnellen oder vielen langsamen Speichern zugeordnet. In Fig. 5 hat z.B. der Speicher $S_1$ die kleinste Zugriffszeit und ist nur

mit einem Bus $B_1$ über den Koppler $KS_1$ verbindbar. Die zwei Speicher $S_2, S_3$ haben gegenüber dem Speicher $S_1$ eine höhere Zugriffszeit und sind gemeinsam an dem Bus $B_2$ über die Koppler $KS_2$ anschließbar. Die drei Speicher $S_4, S_5, S_6$ haben schließlich die höchste Zugriffszeit und sind gemeinsam am Bus $B_3$ über die Koppler $KS_3$ angeschlossen. Die Prozessoren $P_1 \ldots P_n$ sind dagegen jeweils mit allen Bussen $B_1 \ldots B_3$ über Koppler KP verbindbar.

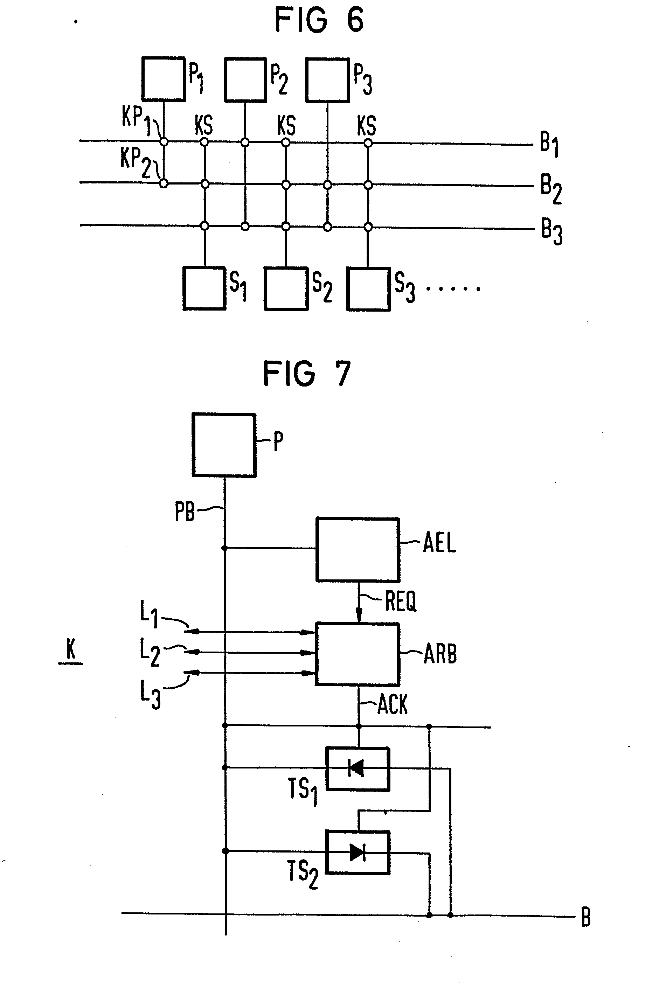

Die bisher erläuterten Mehrfachbusanordnungen der Fig. 2 bis 5 haben den Nachteil, daß bei Ausfall eines Kopplers oder eines Busses der zugeordnete Verbindungsweg unterbrochen ist und somit dieser Verbindungsweg für einen Zugriff nicht mehr benutzt werden kann. Da ein anderer Verbindungsweg nicht besteht, kann vom Prozessor auf den Speicher, zwischen denen der unterbrochene Verbindungsweg liegt, nicht mehr zugegriffen werden. Um dies zu vermeiden, kann die Mehrfachbusanordnung gemäß Fig. 6 derart ausgeführt sein, daß z.B. jeder Prozessor P mit jeweils zwei Bussen $B_1$ und $B_2$ über Koppler KP verbindbar ist. Fig. 6 zeigt dabei das prozessorabhängige Busauswahlverfahren, bei dem die Speicher $S_1 \ldots S_3$ jeweils mit allen Bussen $B_1 \ldots B_3$ verbunden sind. Soll bei einer derartigen Mehrfachbusanordnung z.B. der Prozessor $P_1$ auf den Speicher $S_1$ zugreifen und fällt z.B. der Koppler $KP_1$ aus und damit der Verbindungsweg über den Bus $B_1$, dann besteht noch der Verbindungsweg über den $B_2$, den Koppler $KP_2$ zum Speicher $S_1$. Der Ausfall eines Kopplers oder eines Busses hindert somit nicht den Zugriff zu einem Speicher S.

Entsprechend kann eine Mehrfachbusanordnung auch für ein speicherabhängiges Busauswahlverfahren aufgebaut sein. Dann ist jeder Prozessor P jeweils mit jedem Bus über einen Koppler verbindbar, dagegen jeder Speicher S jeweils mit zwei Bussen verbindbar. Fällt ein Koppler oder ein Bus aus, dann ist trotzdem über den anderen Koppler und über den anderen Bus ein Zugriff von einem Prozessor zu diesem Speicher möglich.

Ein möglicher Aufbau der Koppler K ist in Fig. 7 dargestellt. Der Koppler K weist zwei Tristatetreiber $TS_1$, $TS_2$ auf, über die der Prozessorverbindungsbus PB, wie in Fig. 7, oder ein Speicherverbindungsbus mit dem Bus B verbindbar ist. Weiterhin ist eine Adressenerkennungslogik AEL vorgesehen, die erkennt, auf welchen Speicher über welchen Bus zugegriffen werden soll. Die entsprechende Adresse wird der Adressenerkennungslogik über den Prozessorverbindungsbus PB zugeführt. Gibt der Prozessor P eine dem Bus B zugeordnete Adresse ab, dann gibt die Adressenerkennungslogik AEL ein Signal REQ ab, das einem Arbiter ARB zugeleitet wird. Der Arbiter ARB überprüft, ob Zugriffswünsche von anderen Prozessoren vorliegen. Dazu ist er über Leitungen $L_1$, $L_2$, $L_3$ mit den anderen Prozessoren zugeordneten Arbitern verbunden. Ergibt die Überprüfung, daß der Prozessor P über den Bus B auf einen Speicher zugreifen darf, dann gibt der Arbiter ARB ein Signal ACK ab, das einen der Tristatetreiber TS ansteuert. Je nach dem, in welcher Richtung der Datenfluß gehen soll, wird entweder der Tristatetreiber $TS_1$ oder der Tristatetreiber $TS_2$ angesteuert.

Die in Fig. 7 verwendeten Bausteine sind bekannte Bausteine. Zum Beispiel kann als Tristatetreiber ein Baustein 74241, als Arbiter ARB ein Intel-Arbitrationchip 8289 verwendet werden. Die Adressenerkennungslogik AEL kann als Komparator aufgebaut sein.

Die übrigen in der Mehrfachbusanordnung und dem Mehrprozessorsystem verwendeten Bausteine, also Prozessoren P, Speicher S oder Busse B, sind ebenfalls von bekanntem Aufbau.

9 Patentansprüche, 7 Figuren

Patentansprüche

1. Mehrfachbusanordnung für die Verbindung von Prozessoren und Speichern in einem Mehrprozessorsystem, bei der jeder Prozessor durch jeweils einen Prozessorverbindungsbus über jeweils einen Koppler mit mindestens einem Bus und jeder Speicher durch jeweils einen Speicherverbindungsbus über jeweils einen Koppler mit mindestens einem Bus verbunden ist, dadurch g e k e n n z e i c h n e t , daß jeder Prozessor (P) jeweils mit jedem Bus (B) durch einen Koppler (KP) verbunden ist, und daß jeder Speicher (S) jeweils nur mit einem Teil der Busse (B) über einen Koppler (KS) verbunden ist.

2. Mehrfachbusanordnung für die Verbindung von Prozessoren und Speichern in einem Mehrprozessorsystem, bei der jeder Prozessor durch jeweils einen Prozessorverbindungsbus über jeweils einen Koppler mit mindestens einem Bus und jeder Speicher durch jeweils einen Speicherverbindungsbus über jeweils einen Koppler mit mindestens einem Bus verbunden ist, dadurch g e k e n n z e i c h n e t , daß jeder Prozessor (P) jeweils nur mit einem Teil der Busse (B) über einen Koppler (KP) verbunden ist, und daß jeder Speicher (S) jeweils mit jedem Bus (B) durch einen Koppler (KS) verbunden ist.

3. Mehrfachbusanordnung nach Anspruch 1, dadurch g e k e n n z e i c h n e t , daß jeder Speicher jeweils nur mit einem Bus über einen Koppler (KS) verbunden ist.

4. Mehrfachbusanordnung nach Anspruch 1, dadurch g e k e n n z e i c h ne t , daß jeder Speicher (S) jeweils mit zwei Bussen über jeweils einem Koppler verbunden ist.

0141332

5. Mehrfachbusanordnung nach Anspruch 1, dadurch g e k e n n z e i c h n e t , daß die Anzahl der mit jeweils einem Bus verbundenen Speicher (S) von deren Zugriffszeit abhängt.

6. Mehrfachbusanordnung nach Anspruch 2, dadurch g e k e n n z e i c h n e t , daß jeder Prozessor (P) jeweils nur mit einem Bus (B) über einen Koppler (KP) verbunden ist.

7. Mehrfachbusanordnung nach Anspruch 2, dadurch g e k e n n z e i c h n e t , daß jeder Prozessor (P) jeweils mit zwei Bussen über jeweils einen Koppler verbunden ist.

8. Mehrfachbusanordnung nach Anspruch 2, dadurch g e k e n n z e i c h n e t , daß die Anzahl der mit einem Bus (B) verbundenen Prozessoren (P) von deren Zugriffsprivileg abhängt.

9. Mehrfachbusanordnung nach Anspruch 1 oder 2, dadurch g e k e n n z e i c h n e t , daß mindestens ein Bus für Blocktransfers oder für eine ununterbrechbare Folge von Zugriffen vorgesehen ist, mit dem die Speicher und die Prozessoren verbunden sind, die in dieser Betriebsart arbeiten.

1/3

FIG 1

FIG 2

0141332

## FIG 3

## FIG 4

## FIG 5

## FIG 6

## FIG 7